# EUROPÄISCHE PATENTSCHRIFT

(11) **EP 3 225 422 B1**
(45) Veröffentlichungstag und Bekanntmachung des Hinweises auf die Patenterteilung: **07.04.2021**
(21) Anmeldenummer: 15863166.3
(22) Anmeldetag: 12.10.2015
(51) Int. Cl.: B60K 7/00, B60K 17/04, B60K 1/00, B60B 27/00, B60T 1/00

(54) **RADNABENANTRIEBSANORDNUNG**
WHEEL HUB DRIVE ASSEMBLY
ENSEMBLE D'ENTRAÎNEMENT DE MOYEU DE ROUE

(30) Priorität: 24.11.2014 CN 201410681992
(43) Veröffentlichungstag der Anmeldung: 04.10.2017
(73) Patentinhaber: Schaeffler Technologies AG & Co. KG, 91074 Herzogenaurach (DE)
(72) Erfinder: HUANG, Chao, Shanghai 201804 (CN); GAO, Zhichuan, Shanghai 201804 (CN); WANG, Zhenying, Shanghai 201804 (CN); PAN, Hangyi, Shanghai 201804 (CN)
(86) Internationale Anmeldenummer: PCT/CN2015/091741
(87) Internationale Veröffentlichungsnummer: WO 2016/082633

(56) Entgegenhaltungen:
- WO-A1-2007/081074
- CN-A- 104 708 991
- CN-U- 201 872 602
- CN-U- 202 507 916
- DE-A1-102012 216 130
- DE-T5-112011 101 142
- US-A1- 2014 070 600

## Beschreibung

### Technisches Gebiet

Die vorliegende Erfindung betrifft das Gebiet der Automobiltechnik und insbesondere eine Radnabenantriebseinheit.

### Allgemeiner Stand der Technik

Die größte Besonderheit der Radnabenantriebstechnik ist die Integration von Antriebs-, Übertragungs- und Bremsvorrichtung in der Radnabe, womit der mechanische Teil von elektrisch angetriebenen Fahrzeugen deutlich vereinfacht wird. Dabei verwendet die Antriebsvorrichtung ein Radnaben-Antriebsgerät, bei dem eine elektrische Maschine direkt in der Radnabe eines Fahrzeugs montiert wird. Wenn das Rad angetrieben wird, gibt das Radnaben-Antriebsgerät ein Drehmoment an das Rad aus.

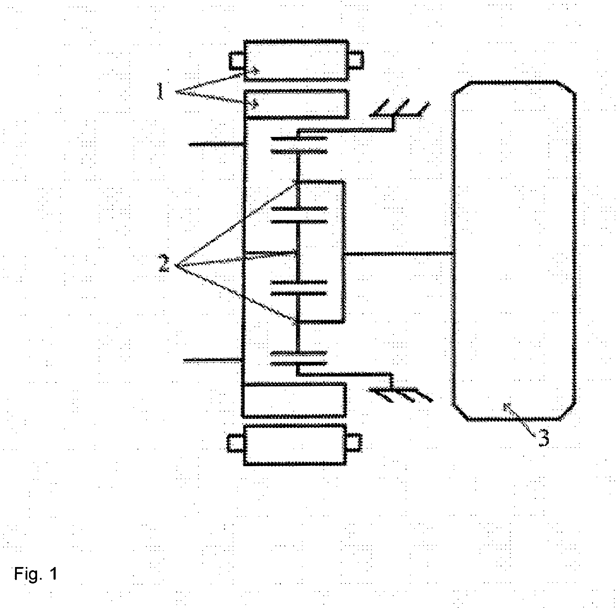

Im Stand der Technik umfasst ein Radnaben-Antriebsgerät mit Untersetzungsgetriebe eine elektrische Maschine und ein mit der elektrischen Maschine verbundenes Untersetzungsgetriebe. Wie in Fig. 1 gezeigt, umfasst das Radnaben-Antriebsgerät eine an der Seite der Radnabe (in der Fig. nicht gekennzeichnet) angeordnete elektrische Maschine 1 und ein am Ausgangsende der elektrischen Maschine angeordnetes Untersetzungsgetriebe 2, wobei das Untersetzungsgetriebe 2 zwischen der elektrischen Maschine 1 und dem Rad 3 montiert ist, das von der elektrischen Maschine 1 ausgegebene Antriebsdrehmoment durch die Wirkung des Untersetzungsgetriebes 2 verstärkt und das verstärkte Antriebsdrehmoment zuletzt an das Rad 3 ausgegeben werden kann. Es ist erkennbar, dass ein solches Radnaben-Antriebsgerät lediglich eine Funktion zur Erzeugung eines Antriebsdrehmoments aufweist und dass somit das Bremsen des Fahrzeugs durch eine zusätzliche Bremse realisiert werden muss.

Im Allgemeinen verfügen Radnaben des Stands der Technik außerdem über ein Radnabenlager, das auf der Zentralachse der Radnabe angeordnet und vom Radnaben-Antriebsgerät durch einen Zwischenraum getrennt ist. Der Lagerinnenring oder der Lageraußenring des Radnabenlagers ist mit dem Ausgangsende des Radnaben-Antriebsgeräts und anschließend mit der Radnabe verbunden, sodass das Radnabenlager die dynamische Belastung während der Rotation des Rads aufnimmt und außerdem die Funktion der Ausgabe des Antriebsdrehmoments an das Rad ausübt.

Im Stand der Technik ist das Radnabenlager unabhängig vom Radnaben-Antriebsgerät, das Radnaben-Antriebsgerät und das Radnabenlager sind separat mit -der Radnabe verbunden und nehmen in der Radnabe zu viel Raum ein, sodass sich das gesamte System nach außerhalb des Rads erweitert und es dadurch leicht zu Konflikten mit der Fahrzeugaufhängung kommt.

Die CN 202 507 916 U beschreibt einen Radnabenantrieb mit einem Getriebe, dessen Planetenträger mit dem rotierenden Lageraußenring verbunden ist.

Die DE 11 2011 101 142 T5 und die US 2014/070600 A1 beschreiben jeweils einen im Radlager integrierten Radnabenmotor.

Die DE 10 2012 216 130 A1 beschreibt einen Radnabenantrieb, bei dem ein Getriebe radial innerhabl von Rotor und Stator des Antriebsmotors angeordnet ist.

### Kurzdarstellung der Erfindung

Die von der vorliegenden Erfindung zu lösende Aufgabe ist die Bereitstellung eines Radnaben-Antriebsgeräts mit einem integrierten Untersetzungsgetriebe und Radnabenlager, um den Raum in der Radnabe zu optimieren.

Um die oben stehende Aufgabe zu lösen, stellt die vorliegende Erfindung eine Radnabenantriebseinheit gemäß Anspruch 1 bereit. Diese umfasst eine Radnabe; ein Radnabenlager, das innerhalb der Radnabe sowie auf deren Zentralachse angeordnet ist, wobei ein Lagerinnenring des Radnabenlagers ein rotierender Ring und ein Lageraußenring des Radnabenlagers ein nicht-rotierender Ring ist; ein Gehäuse, welches das Radnabenlager umschließt und einen Radnabenraum bildet, wobei der Gehäuseraum eine abgedichtete erste Aufnahmekammer und eine abgedichtete zweite Aufnahmekammer umfasst; ein Antriebsgerät, das in der ersten Aufnahmekammer angeordnet ist; ein Untersetzungsgetriebe, das in der zweiten Aufnahmekammer angeordnet ist; wobei das Eingangsende des Untersetzungsgetriebes mit dem Ausgangsende des Antriebsgeräts verbunden ist, das Ausgangsende des Untersetzungsgetriebes mit dem rotierenden Ring verbunden ist, der rotierende Ring außerdem mit der Radnabe verbunden ist; und der nicht-rotierende Ring mit dem Gehäuse verbunden ist.

Erfindungsgemäß ist der rotierende Ring über ein erstes Verbindungsteil mit dem Ausgangsende des Untersetzungsgetriebes und der Radnabe verbunden, wobei das erste Verbindungsteil eine Verbindungswelle umfasst, die mit dem rotierenden Ring durch Aufsetzen verbunden ist, sowie ein koaxial zur Verbindungswelle angeordnetes und mit dieser verbundenes ringförmiges Teil, das mit dem Ausgangsende des Untersetzungsgetriebes und der Radnabe verbunden ist, wobei der Außendurchmesser des ringförmigen Teils größer ist als der Außendurchmesser der Verbindungswelle.

Erfindungsgemäß ist das ringförmige Teil in Axialrichtung dem Gehäuse gegenüber angeordnet und dient als Seitenwand der zweiten Aufnahmekammer, wobei das ringförmige Teil, die Außenumfangsfläche der Verbindungswelle, das Ausgangsende des Antriebsgeräts und die Innenumfangsfläche des Gehäuses die zweite Aufnahmekammer umschließen.

Erfindungsgemäß wird das ringförmige Teil mit dem Ausgangsende des Untersetzungsgetriebes auf folgende Weise verbunden: Am ringförmigen Teil sind mehrere erste Vorsprünge angeordnet, die in Richtung auf das Ausgangsende des Untersetzungsgetriebes vorgestreckt und entlang der Umfangsrichtung mit Zwischenräumen verteilt sind; am Ausgangsende des Untersetzungsgetriebes sind mehrere zweite Vorsprünge angeordnet, die in Richtung auf die Verbindungswelle vorgestreckt und entlang der Umfangsrichtung mit Zwischenräumen verteilt sind, wobei jeder erste Vorsprung zwischen zwei benachbarte zweite Vorsprünge geklemmt wird und/ oder jeder zweite Vorsprung zwischen zwei benachbarte erste Vorsprünge geklemmt wird.

Wahlweise sind die ersten Vorsprünge an der in Axialrichtung auf das Ausgangsende des Untersetzungsgetriebes gerichteten Endfläche des ringförmigen Teils angeordnet; und die zweiten Vorsprünge sind an der Außenumfangsfläche des Ausgangsendes des Untersetzungsgetriebes angeordnet und in Radialrichtung vorgestreckt.

Wahlweise wird das ringförmige Teil mit dem Ausgangsende des Untersetzungsgetriebes auf folgende Weise verbunden: An der in Axialrichtung auf das Ausgangsende des Untersetzungsgetriebes gerichteten Endfläche des ringförmigen Teils ist eine in Axialrichtung erstreckte vorstehende Achse angeordnet; und das Ausgangsende des Untersetzungsgetriebes ist mit der vorstehenden Achse durch eine Keilverzahnung verbunden.

Wahlweise ist zwischen der Außenumfangsfläche des ringförmigen Teils und der Innenumfangsfläche des Gehäuses ein Dichtungsteil angeordnet.

Wahlweise ist zwischen der Außenumfangsfläche der Verbindungswelle und der Innenumfangsfläche des Ausgangsendes des Antriebsgeräts ein Dichtungsteil angeordnet.

Erfindungsgemäß ist der Lagerinnenring der rotierende Ring und der Lageraußenring der nicht-rotierende Ring.Wahlweise ist der Lageraußenring über ein zweites Verbindungsteil mit dem Gehäuse verbunden.

Wahlweise ist an der Innenumfangsfläche des zweiten Verbindungsteils ein Begrenzungsteil angeordnet; wobei bei der Montage des zweiten Verbindungsteils am Lageraußenring das Begrenzungsteil in Axialrichtung und in Richtung auf das Untersetzungsgetriebe an den Lageraußenring stößt.

Wahlweise umfasst die Radnabenantriebseinheit weiterhin eine in der dritten Aufnahmekammer angeordnete Bremse, deren Ausgangsende mit dem Ausgangsende des Antriebsgeräts und/ oder dem Eingangsende des Untersetzungsgetriebes verbunden ist.

Wahlweise ist das Gehäuse in Axialrichtung in mindestens zwei Teile aufgeteilt, wobei der in Axialrichtung am weitesten außenseitig angeordnete Teil des Gehäuses die Seitenwand der dritten Aufnahmekammer bildet und die Bremse an dem in Axialrichtung am weitesten außenseitig angeordneten Teil montiert ist.

Wahlweise ist das Antriebsgerät eine elektrische Antriebsmaschine, umfassend einen Stator, einen Rotor und eine mit dem Rotor verbundene und aus der ersten Aufnahmekammer herausgestreckte Rotorhalterung, wobei die Rotorhalterung als Ausgangsende des Antriebsgeräts dient.

Wahlweise ist das Untersetzungsgetriebe ein Planeten-Untersetzungsgetriebe; wobei das Ausgangsende des Untersetzungsgetriebes der Planetenrahmen ist und das Sonnenrad des Untersetzungsgetriebes als Eingangsende dient.

Wahlweise umfasst die Radnabenantriebseinheit weiterhin ein in der ersten Aufnahmekammer angeordnetes Kühlsystem, das verwendet wird, um das Antriebsgerät zu kühlen.

Im Vergleich zum Stand der Technik bietet die technische Lösung der vorliegenden Erfindung folgende Vorteile:
Die vorliegende Erfindung stellt eine neuartige Radnabenantriebseinheit bereit, bei der das Ausgangsende des Untersetzungsgetriebes mit dem rotierenden Ring des Radnabenlagers verbunden ist und der rotierende Ring mit der Radnabe verbunden ist, sodass das Untersetzungsgetriebe und das Radnabenlager im Radnaben-Antriebsgerät integriert sind und die Anordnung von Antriebsgerät, Radnabenlager und Untersetzungsgetriebe in dem eingeschränkten Raum im Innern der Radnabe optimiert wird.

### Beschreibung der beigefügten Figuren

Fig. 1 zeigt eine schematische Darstellung des Aufbaus eines Radnaben-Antriebsgeräts des Stands der Technik.
Fig. 2 zeigt eine Darstellung der Modulstruktur einer Radnabenantriebseinheit in einem Ausführungsbeispiel der vorliegenden Erfindung.
Fig. 3 zeigt eine dreidimensionale Explosionsdarstellung einer Radnabenantriebseinheit in einem Ausführungsbeispiel der vorliegenden Erfindung.
Fig. 4 zeigt eine axiale Schnittdarstellung einer Radnabenantriebseinheit in einem Ausführungsbeispiel der vorliegenden Erfindung.
Fig. 5 zeigt eine Schnittdarstellung des Radnabenlagers einer Radnabenantriebseinheit in einem Ausführungsbeispiel der vorliegenden Erfindung.
Fig. 6 zeigt eine dreidimensionale Darstellung des ersten Verbindungsteils einer Radnabenantriebseinheit in einem Ausführungsbeispiel der vorliegenden Erfindung.
Fig. 7 zeigt eine Flächendarstellung des Ausgangsendes des Untersetzungsgetriebes einer Radnabenantriebseinheit in einem Ausführungsbeispiel der vorliegenden Erfindung.
Fig. 8 zeigt eine axiale Schnittdarstellung des Untersetzungsgetriebes einer Radnabenantriebseinheit in einem Ausführungsbeispiel der vorliegenden Erfindung.

### Ausführungsformen

Um die oben beschriebenen Ziele, Merkmale und Vorteile der vorliegenden Erfindung noch deutlicher und besser verständlich zu machen, wird im Folgenden in Verbindung mit den beigefügten Figuren zu den konkreten Ausführungsbeispielen der vorliegenden Erfindung eine detaillierte Beschreibung gegeben.

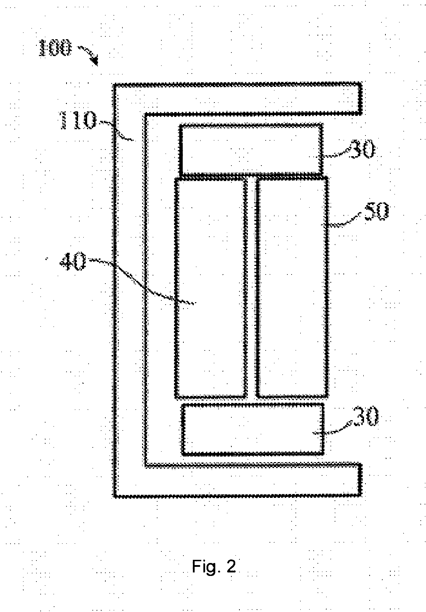

Wie in Fig. 2 bis 5 gezeigt, umfasst die Radnabenantriebseinheit 100 im vorliegenden Ausführungsbeispiel eine Radnabe 110; ein Radnabenlager 10, das auf der Zentralachse der Radnabe 110 angeordnet ist, wobei der Lagerinnenring 11 des Radnabenlagers 10 ein rotierender Ring ist und der Lageraußenring 12 ein nicht-rotierender Ring ist; ein Gehäuse 20, das zwischen dem Radnabenlager 10 und der Radnabe 110 angeordnet ist, das Radnabenlager 10 umschließt und einen Gehäuseraum bildet, der eine erste Aufnahmekammer, eine zweite Aufnahmekammer und eine dritte Aufnahmekammer umfasst, wobei das Gehäuse 20 in Axialrichtung einen ersten Teil 201, einen zweiten Teil 202 und einen zwischen dem ersten Teil 201 und dem zweiten Teil 202 angeordneten dritten Teil 203 umfasst und wobei der zweite Teil 202 der in Axialrichtung am weitesten außenseitig angeordnete Teil des Gehäuses 20 ist und in Axialrichtung von der Radnaben-Montagefläche entfernt ist; sowie ein in der ersten Aufnahmekammer angeordnetes Antriebsgerät 30; ein in der zweiten Aufnahmekammer angeordnetes Untersetzungsgetriebe 40; eine in der dritten Aufnahmekammer angeordnete Bremse 50; wobei das Ausgangsende des Antriebsgeräts 30 aus der ersten Aufnahmekammer herausgestreckt und gemeinsam mit dem Ausgangsende der Bremse 50 mit dem Eingangsende des Untersetzungsgetriebes 40 verbunden ist und das Ausgangsende des Untersetzungsgetriebes 40 und der Lagerinnenring 11 über ein erstes Verbindungsteil 60 mit der Radnabe 110 verbunden sind.

Das vorliegende Ausführungsbeispiel stellt eine neuartige Radnabenantriebseinheit bereit, bei der das Untersetzungsgetriebe 40 und der rotierende Ring des Radnabenlagers 10 über ein erstes Verbindungsteil 60 mit der Radnabe 110 verbunden sind, das Untersetzungsgetriebe 40 und das Radhabenlager 10 im Radnaben-Antriebsgerät 30 integriert sind und die Anordnung des Antriebsgeräts 30, des Radnabenlagers 10 und des Untersetzungsgetriebes 40 in dem eingeschränkten Raum im Innern der Radnabe 110 optimiert wird. Darüber hinaus ist auch die Bremse 50 in der dritten Aufnahmekammer des Gehäuseraums angeordnet, womit der eingeschränkte Raum im Innern der Radnabe noch effektiver genutzt und der Aufbau der gesamten Radnabenantriebseinheit komprimiert wird.

Es ist anzumerken, dass der Lagerinnenring des Radnabenlagers im vorliegenden Ausführungsbeispiel ein rotierender Ring und der Lageraußenring ein nicht-rotierender Ring ist, sie aber nicht hierauf beschränkt sind. In einem formveränderten Beispiel kann außerdem der Lagerinnenring ein nicht-rotierender Ring und der Lageraußenring ein rotierender Ring sein.

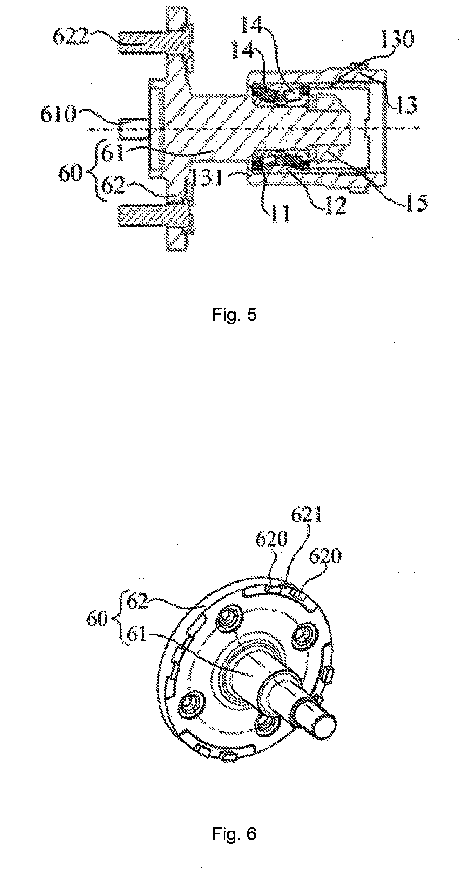

Wie in Verbindung mit Fig. 5 bis 7 gezeigt, umfasst das erste Verbindungsteil 60 eine Verbindungswelle 61, wobei der Lagerinnenring 11 auf dem einen Endteil der Verbindungswelle 61 aufgesetzt ist und wobei in einem anderen Beispiel, wenn der Lageraußenring ein rotierender Ring ist, die Verbindungswelle als Hohlwelle konstruiert und auf dem Lageraußenring aufgesetzt ist; sowie ein ringförmiges Teil 62, das koaxial zur Verbindungswelle 61 angeordnet und mit dieser verbunden ist, zum Lageraußenring 12 in Axialrichtung einen Zwischenraum aufweist und jeweils mit dem Ausgangsende des Untersetzungsgetriebes 40 und der Radnabe 110 verbunden ist; wobei das ringförmige Teil 62 eine Kreisscheibenform aufweist, sein Außendurchmesser größer als der Außendurchmesser der Verbindungswelle 61 ist, es dem ersten Teil 201 des Gehäuses 20 in Axialrichtung gegenüber angeordnet ist und als Seitenwand der zweiten Aufnahmekammer dient und wobei das ringförmige Teil 62, die Außenumfangsfläche der Verbindungswelle 61 und die Innenumfangsfläche des ersten Teils 201 die zweite Aufnahmekammer umschließen. Dabei bilden das ringförmige Teil 62 und die Verbindungswelle 61 eine Einheit.

Das ringförmige Teil 62 und das Ausgangsende des Untersetzungsgetriebes 40 sind auf folgende Weise miteinander verbunden: An der in Axialrichtung auf das Ausgangsende des Untersetzungsgetriebes 40 gerichteten Oberfläche des ringförmigen Teils 62 sind entlang der Umfangsrichtung mit Zwischenräumen verteilt erste Vorsprünge 620 angeordnet, wobei zwei benachbarte erste Vorsprünge 620 einen Begrenzungsraum 621 einschließen und die gemeinsamen Zwischenräume vier Begrenzungsräume 621 bilden; und entsprechend sind an der Außenumfangsfläche des Ausgangsendes des Untersetzungsgetriebes 40 in Radialrichtung vorstehend und entlang der Umfangsrichtung mit Zwischenräumen verteilt vier zweite Vorsprünge 400 angeordnet. Alle ersten Vorsprünge 620 und zweiten Vorsprünge 400 können in Axialrichtung zusammenarbeiten, was auf folgende Weise abläuft: Jeder zweite Vorsprung 400 kann in einem Begrenzungsraum 621 positioniert werden, das Ausgangsende des Untersetzungsgetriebes 40 treibt während der Rotation über die zweiten Vorsprünge 400 und die ersten Vorsprünge 620 das erste Verbindungsteil 60 an, sodass dieses rotiert, woraufhin die Radnabe 110 und der Lagerinnenring 11 angetrieben werden und rotieren. In einem anderen Beispiel kann die Anzahl der ersten Vorsprünge und der zweiten Vorsprünge nach Bedarf gewählt werden.

Darüber hinaus ist auch folgende Variante möglich: An der in Axialrichtung auf das ringförmige Teil gerichteten Oberfläche des Ausgangsendes des Untersetzungsgetriebes sind entlang der Umfangsrichtung mit Zwischenräumen verteilt mehrere erste Vorsprünge angeordnet und entsprechend sind an der Außenumfangsfläche des ringförmigen Teils mehrere zweite Vorsprünge angeordnet; wobei beim Verbinden jeder zweite Vorsprung zwischen zwei benachbarten ersten Vorsprüngen positioniert wird und/ oder jeder erste Vorsprung zwischen zwei benachbarten zweiten Vorsprüngen positioniert wird. In einem anderen Beispiel können auch an einer der beiden einander in Axialrichtung gegenüber angeordneten Endflächen des Ausgangsendes des Untersetzungsgetriebes und des ringförmigen Teils entlang der Umfangsrichtung mit Zwischenräumen verteilt mehrere erste Vorsprünge angeordnet sein, wobei an der anderen Endfläche entlang der Umfangsrichtung mit Zwischenräumen verteilt mehrere zweite Vorsprünge angeordnet sind und die ersten Vorsprünge mit den zweiten Vorsprüngen in Axialrichtung kombiniert werden können, indem jeder erste Vorsprung zwischen zwei benachbarten zweiten Vorsprüngen positioniert werden kann und/ oder jeder zweite Vorsprung zwischen zwei benachbarten ersten Vorsprüngen positioniert werden kann.

In einem formveränderten, nicht von der Erfindung umfassten Beispiel kann die Verbindung des ringförmigen Teils mit dem Ausgangsende des Untersetzungsgetriebes auch auf folgende Weise erfolgen: An der in-Axialrichtung auf das Ausgangsende des Untersetzungsgetriebes gerichteten Oberfläche des ringförmigen Teils ist eine in Axialrichtung erstreckte vorstehende Achse angeordnet; wobei das Ausgangsende des Untersetzungsgetriebes mit der vorstehenden Achse durch eine Keilverzahnung verbunden ist. Beispielsweise sind an der Außenumfangsfläche der vorstehenden Achse mehrere Außenzähne angeordnet; und in der in Axialrichtung auf das ringförmige Teil gerichteten Oberfläche des Ausgangsendes des Untersetzungsgetriebes ist eine Nut angeordnet, an deren Innenumfangsfläche Innenzähne angeordnet sind, wobei beim Verbinden, beim Einführen der vorgestreckten Achse in die Nut, die Innenzähne und die Außenzähne eine Keilverzahnung bilden.

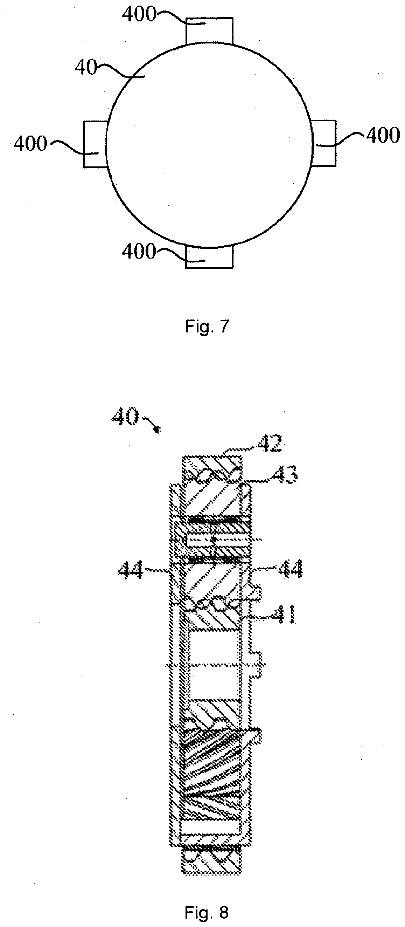

Im Vergleich zu einer Verbindung durch Keilverzahnung weist das erfindungsgemäße Beispiel in Fig. 6 und 7 folgende Vorteile auf: Die zweiten Vorsprünge 400 werden lediglich durch zwei erste Vorsprünge 620 in Umfangsrichtung positioniert, nicht aber in Radialrichtung, was bei Vibrationen während der Fahrt des Fahrzeugs zwischen dem Ausgangsende des Untersetzungsgetriebes 40 und dem ringförmigen Teil 62 eine Hin-und-Her-Bewegung in Radialrichtung zulässt, womit die durch Vibrationen des Rads verursachten radialen Stoßkräfte des ringförmigen Teils auf das Ausgangsende des Untersetzungsgetriebes verringert werden können, damit Beschädigungen durch zu starke Stöße verhindert werden und die Lebensdauer verlängert wird.

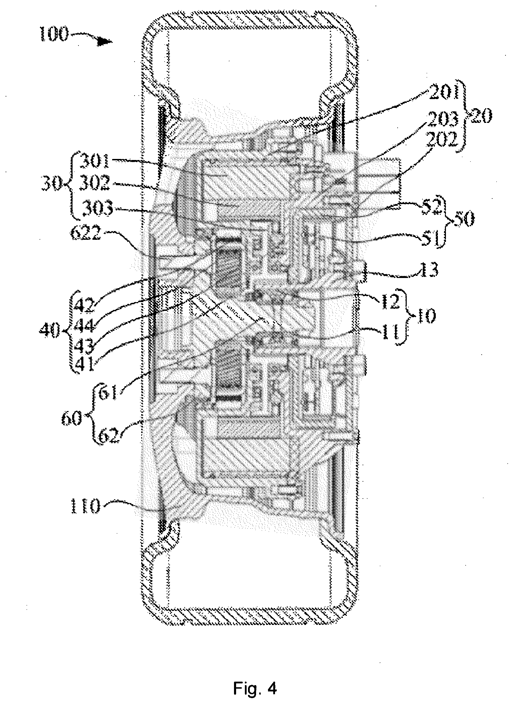

Wie weiter in Fig. 4 und 5 gezeigt, wird das ringförmige Teil 62 über eine an diesem angeordnete Gewindestange 622 durch eine Schraubverbindung an der Radnabe 110 montiert, wobei die Gewindestange 622 durch Presspassung in einer axialen Durchgangsbohrung des ringförmigen Teils 62 montiert wird. Darüber hinaus kann die Gewindestange auch mit dem ringförmigen Teil eine Einheit bilden. An der in Axialrichtung auf die Radnabe gerichteten Endfläche der Verbindungswelle 61 ist eine auf der Zentralachse angeordnete Positionierungsachse 610 angeordnet, wobei die Positionierungsachse 610 in eine gegenüber angeordnete Positionierungsnut in der Radnabe eingeführt wird und die Positionierungsachse 610 während der Montage eine falsche Positionierung verhindert.

Wie in Fig. 4 und 5 gezeigt, ist am Lageraußenring 12 ein zweites Verbindungsteil 13 aufgesetzt, wobei der Lageraußenring 12 über das zweite Verbindungsteil 13 mit dem zweiten Teil 202 des Gehäuses 20 verbunden ist. Das zweite Verbindungsteil 13 wird weiterhin verwendet, um das Radnabenlager 10 zu stützen, sodass das Radnabenlager 10 im Gehäuse 20 abgestützt ist. Von den beiden axialen Endflächen des Lageraußenrings 12 stößt die vom ringförmigen Teil 62 entfernte Endfläche an ein an der Innenumfangsfläche des zweiten Verbindungsteils 13 montiertes Begrenzungsteil 130, die andere Endfläche stößt an eine Stanz-Haltekante 131 des zweiten Verbindungsteils 13, der Lageraußenring 12 wird von dem Begrenzungsteil 130 und der Stanz-Haltekante 131 positioniert und positioniert gleichzeitig Rollenkörper 14 in Axialrichtung mit Vorspannung. Das Begrenzungsteil 130 des vorliegenden Ausführungsbeispiels ist eine Gewindehülse, an deren Außenumfangsfläche ein Außengewinde angeordnet ist; das zweite Verbindungsteil 13 ist ein Hohlzylinder, dessen Innenumfangsfläche in Axialrichtung in einen Bereich mit Innengewinde und einen Bereich ohne Innengewinde unterteilt ist. Bei der Montage wird zunächst der Lageraußenring 12 von der Seite des Bereichs ohne Innengewinde aus in das zweite Verbindungsteil 13 montiert, sodass es im Bereich ohne Innengewinde angeordnet ist, wobei es mit dem zweiten Verbindungsteil 13 durch Presspassung verbunden sein kann; anschließend wird an der Endfläche des zweiten Verbindungsteils 13 an dem Ende mit dem Bereich ohne Innengewinde durch Stanzen eine Stanz-Haltekante 131 gebildet; danach wird das Positionierungsteil 130 von der Seite des Bereichs mit Innengewinde in das zweite Verbindungsteil 13 geschraubt, bis das Positionierungsteil 130 an den Lageraußenring 12 stößt.

Wie in Verbindung mit Fig. 6 gezeigt, ist der Außendurchmesser des vom ringförmigen Teil 62 entfernten Endteils der Verbindungswelle 61 kleiner als der Außendurchmesser der anderen Teile, der Lagerinnenring 11 ist auf diesen Endteil aufgesetzt und stößt in Axialrichtung an den diesem Endteil benachbarten Teil der Verbindungswelle, er kann mit der Verbindungswelle 61 durch Presspassung verbunden sein und an dem im zweiten Verbindungsteil 13 angeordneten Ende der Verbindungswelle 61 ist ein in Axialrichtung an den Lagerinnenring 11 stoßendes Vorspannteil 15 angeordnet, wobei das Vorspannteil 15 den Lagerinnenring 11 vorspannt und positioniert. Dabei ist das Vorspannteil 15 eine Schraubenmutter und bildet mit der Verbindungswelle 61 eine Gewindeverbindung.

In einem formveränderten Beispiel kann der Lagerinnenring mit dem ersten Verbindungsteil-eine-Einheit bilden und/oder der Lageraußenring kann mit dem zweiten Verbindungsteil eine Einheit bilden.

In dem Beispiel in Fig. 5 sind die Rollenkörper 14 Kegelrollen und das Radnabenlager 10 ist ein zweireihiges Kegelrollenlager. Der Typ des Radnabenlagers stellt keine Einschränkung des Schutzumfangs der vorliegenden Erfindung dar, sondern kann nach Bedarf gewählt werden.

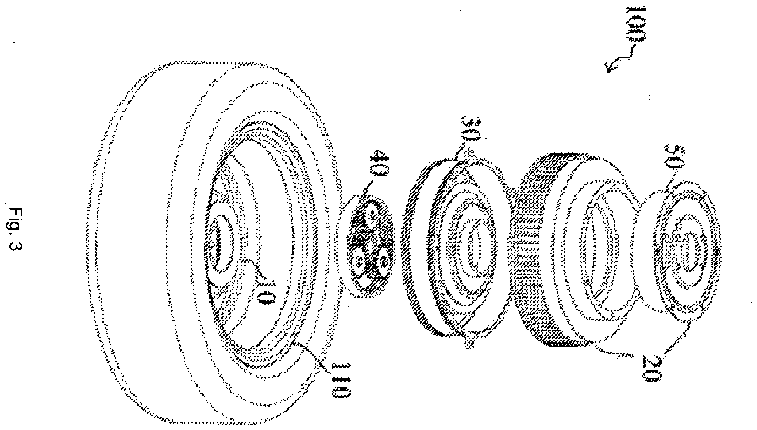

Im vorliegenden Ausführungsbeispiel ist, wie in Fig. 3 und 4 gezeigt, der erste Teil 201 des Gehäuses 20 ringförmig und seine axiale Schnittfläche bildet eine C-Form; der dritte Teil 203 ragt aus der Radnabe 10 heraus und verschließt im Prinzip die C-förmige Öffnung des ersten Teils 201, um eine erste Aufnahmekammer zu bilden; die Innenumfangsfläche des ersten Teils 201 und das erste Verbindungsteil 60 umschließen die zweite Aufnahmekammer; und der zweite Teil 202 umschließt mit dem zweiten Verbindungsteil 13 und dem dritten Teil 203 die dritte Aufnahmekammer. Dabei kann im vorliegenden Ausführungsbeispiel das ringförmige Teil 62 neben der Übernahme einer Verbindungsfunktion außerdem auf die zweite Aufnahmekammer eine Dichtungswirkung ausüben. Weiterhin ist zwischen der Außenumfangsfläche des ringförmigen Teils 62 und der Innenumfangsfläche des Gehäuses 20 ein Dichtungsteil (in den Fig. nicht gezeigt) angeordnet wie beispielsweise ein Dichtungsring.

Die Radnabenantriebseinheit 100 wird wie folgt montiert:
Im ersten Schritt wird der erste Teil 201 in die Radnabe 110 eingesetzt, wobei seine C-förmige Öffnung nach außen weist.

Im zweiten Schritt wird das Antriebsgerät 30 entsprechend in der C-förmigen Öffnung montiert, das Untersetzungsgetriebe 40 wird auf die Verbindungswelle 61 aufgesetzt und am ersten Teil 201 befestigt, wobei das Ausgangsende des Untersetzungsgetriebes 40 mit dem ringförmigen Teil 62 und über das ringförmige Teil 62 mit der Radnabe 110 verbunden wird. Dabei ist das Ausgangsende des Antriebsgeräts 30 in Richtung auf die Zentralachse der Radnabe vorgestreckt und mit dem Eingangsende des Untersetzungsgetriebes 40 verbunden.

-- Im dritten Schritt wird der dritte Teil 203 abdeckend auf dem ersten Teil 201 angeordnet.

Im vierten Schritt wird der zweite Teil 202 mit der an ihm montierten Bremse 50 in Axialrichtung abdeckend auf dem dritten Teil 203 angeordnet und über ein Durchgangsloch des dritten Teils 203 wird das Ausgangsende der Bremse 50 mit dem Ausgangsende des Antriebsgeräts 30 und dem Eingangsende des Untersetzungsgetriebes 40 verbunden.

In einem anderen Ausführungsbeispiel kann das Gehäuse 20 auch aus zwei Teilen bestehen, indem beispielsweise der zweite Teil 202 und der dritte Teil 203 eine Einheit bilden und zu einem Teil zusammengefasst sind und dieses abdeckend auf dem ersten Teil 201 angeordnet wird. Es ist zu beachten, dass das Gehäuse 20 auch aus mehr als drei Teilen zusammengesetzt sei kann und dass nur gegeben sein muss, dass die übrigen Gehäuseteile mit dem am weitesten innenseitig angeordneten ersten Teil 201 einen Gehäuseraum umschließen, um das Ziel der vorliegenden Erfindung erreichen zu können.

Im vorliegenden Ausführungsbeispiel sind das Ausgangsende des Antriebsgeräts 30 und das Ausgangsende der Bremse 50 über das Ausgangsende des Untersetzungsgetriebes 40 mit dem ersten Verbindungsteil 60 verbunden, der mit dem Lagerinnenring 11 durch Aufsetzen verbunden ist, und sie sind über das erste Verbindungsteil 60 mit der Radnabe 110 verbunden. Die Radnabenantriebseinheit 100 des vorliegenden Ausführungsbeispiels lässt sich äußerst einfach und schnell montieren.

Im Folgenden werden das Antriebsgerät 30, die Bremse 50 und das Untersetzungsgetriebe 40 nacheinander detailliert beschrieben. Das Antriebsgerät 30 wird verwendet, um ein Antriebsdrehmoment zu erzeugen. Wie in Fig. 4 gezeigt, ist im vorliegenden Ausführungsbeispiel das Antriebsgerät 30 eine elektrische Maschine und konkret eine elektrische Maschine mit Innenrotor (beispielsweise kann dies ein Hochgeschwindigkeits-Innenläufermotor sein), umfassend einen in der ersten Aufnahmekammer befestigten und mit dem ersten Teil 201 verbundenen Stator 301, einen im Stator 301 angeordneten Rotor 302, eine mit dem Rotor 302 verbundenen Rotorhalterung 303 sowie ein zwischen der Rotorhalterung 303 und dem ersten Teil 201 angeordnetes Stützlager (in der Fig. nicht dargestellt). Dabei dient die Rotorhalterung 303 als-Ausgangsende der elektrischen Maschine, das in-Axialrichtung mit dem Eingangsende des Untersetzungsgetriebes 40 verbunden ist und das Antriebsdrehmoment an das Eingangsende des Untersetzungsgetriebes 40 ausgibt. Aufgrund der Verstärkungswirkung des Untersetzungsgetriebes 40 auf das Drehmoment sinken die Anforderungen an das Antriebsdrehmoment für die Rotation des Rads und entsprechend verringern sich die Anforderungen an die Abmessungen der elektrischen Maschine, womit sich der für die elektrische Maschine benötigte Montageraum verkleinert. Außerdem rotiert der mit dem Eingangsende des Untersetzungsgetriebes 40 verbundene Teil der Rotorhalterung 303 um die Verbindungswelle 61, sodass die gesamte zweite Aufnahmekammer von der Außenumfangsfläche der Verbindungswelle 61, dem ringförmigen Teil 62, der Innenumfangsfläche des ersten Teils 201 und der Rotorhalterung 303 umschlossen wird. Weiterhin ist zwischen der Innenumfangsfläche der Rotorhalterung 303 und der Außenumfangsfläche der Verbindungswelle 61 ein Dichtungsteil (in der Fig. nicht dargestellt) angeordnet, um eine die zweite Aufnahmekammer abdichtende Wirkung auszuüben.

Das Antriebsgerät 30 kann weiterhin ein Kühlsystem umfassen wie beispielsweise ein Luftkühlsystem oder ein Wasserkühlsystem. Im vorliegenden Ausführungsbeispiel wird als Kühlsystem eine Kühlwasserhülse verwendet, um Wärme von der elektrischen Maschine abzuführen. Die Kühlwasserhülse kann zwischen dem Stator 301 und dem ersten Teil 201 befestigt sein. Dabei kann für die Rotorhalterung 303 auch ein beliebiges wärmeisolierendes Material verwendet werden.

In einem formveränderten Beispiel ist das Antriebsgerät 30 nicht auf eine elektrische Maschine mit Innenrotor beschränkt, sondern es kann auch eine elektrische Maschine mit Außenrotor verwendet werden.

Die Bremse 50 wird verwendet, um ein Bremsdrehmoment zu erzeugen. Wie in Fig. 3 und 4 gezeigt, ist im vorliegenden Ausführungsbeispiel die Bremse 50 eine Trommelbremse, umfassend einen mit dem zweiten Teil 202 des Gehäuses 20 verbundenen Bremsschuh 51; und eine am Außenumfang des Bremsschuhs 51 angeordnete Bremstrommel 52. Die Bremstrommel 52 dient als Verbindung des Ausgangsendes der Bremse 50 mit dem Untersetzungsgetriebe 40 und gibt das Bremsdrehmoment an das Untersetzungsgetriebe 40 aus. Aufgrund der Verstärkungswirkung des Unterset- zungsgetriebes 40 auf das Drehmoment sinken die Anforderungen an das Bremsdrehmoment für die Bremsung des Rads und entsprechend verringern sich die Anforderungen an die Abmessungen der Bremse 50, womit sich der für die Bremse 50 benötigte Montageraum verkleinert.

Im vorliegenden Ausführungsbeispiel sind die Rotorhalterung 303 der elektrischen Maschine und die Bremstrommel 52 mit dem Eingangsende des Untersetzungsgetriebes 40 verbunden. Diese drei sind über ein Verbindungsteil fest miteinander verbunden, wobei das Verbindungsteil ein Schraube-Flansch-Verbindungsteil sein kann, es aber nicht auf die obige Verbindungsform beschränkt ist.

Das Untersetzungsgetriebe 40 wird verwendet, um ein Antriebsdrehmoment oder ein Bremsdrehmoment zu verstärken. Wie in Fig. 3 und 4 in Verbindung mit Fig. 8 gezeigt, ist das Untersetzungsgetriebe 40 ein Planeten-Untersetzungsgetriebe, umfassend ein Sonnenrad 41, das als Eingangsende des Untersetzungsgetriebes 40 dient und mit der Rotorhalterung 303 und der Bremstrommel 52 verbunden ist; einen Zahnring 42, welcher das Sonnenrad 41 in Radialrichtung umfasst und am ersten Teil 201 montiert ist; mehrere Planetenräder 43, die zwischen dem Sonnenrad 41 und dem Zahnring 42 angeordnet und gleichzeitig mit dem Sonnenrad 41 und dem Zahnring 42 verzahnt sind; und einen Planetenrahmen 44, der mit den mehreren Planetenrädern 43 verbunden und als Ausgangsende des Untersetzungsgetriebes 40 mit der Radnabe verbunden ist. Im vorliegenden Ausführungsbeispiel ist der Planetenrahmen 44 durch ein erstes Verbindungsteil 60 mit der Radnabe 110 verbunden.

Es ist zu beachten, dass im vorliegenden Ausführungsbeispiel das Untersetzungsgetriebe 40 nicht auf ein Planeten-Untersetzungsgetriebe beschränkt sein muss, sondem ein beliebiges mechanisches System sein kann, mit dem ein Antriebsdrehmoment und ein Bremsdrehmoment verstärkt werden können.

Wie in Fig. 4 gezeigt, ist im vorliegenden Ausführungsbeispiel die Bremse 50 im Antriebsgerät 30 des Radnaben-Antriebsgeräts integriert und das Untersetzungsgetriebe 40 wird gleichzeitig für das Antriebsgerät 30 und die Bremse 50 verwendet. Das heißt, das Ausgangsende des Antriebsgeräts 30 (die Rotorhalterung 303) und das Ausgangsende der Bremse 50 (die Bremstrommel 52) sind jeweils mit dem Eingangsende des Untersetzungsgetriebes 40 (dem Sonnenrad 41) verbunden und das Ausgangsende des Untersetzungsgetriebes 40 gibt an das Rad sowohl ein Antriebsdrehmoment als auch ein Bremsdrehmoment aus.

Aus den obenstehenden Ausführungen ist erkennbar, dass im vorliegenden Ausführungsbeispiel die elektrische Maschine als Antriebsquelle und die Trommelbremse als Bremsquelle dient, ihre Ausgangsenden jeweils mit dem Eingangsende des Planeten-Untersetzungsgetriebes verbunden sind und sie jeweils das Antriebssystem und das Bremssystem der Radnabenantriebseinheit 100 bilden. Die Bremse wird nicht mehr getrennt vom Radnaben-Antriebsgerät angeordnet, sondern mit dem Radnaben-Antriebsgerät verbunden, sodass sie gemeinsam zu einer organischen Einheit werden und eine Radnabenantriebseinheit mit gleichzeitiger Antriebs- und Bremsfunktion bilden; und das Antriebsgerät 30 und die Bremse 50 nutzen gemeinsam ein Untersetzungsgetriebe, sodass bei Reduzierung der mechanischen Komponenten gleichzeitig auch Radnabenraum gespart werden kann.

Im vorliegenden Ausführungsbeispiel ist das Arbeitsprinzip der Radnabenantriebseinheit 100 wie folgt:
Die Rotorhalterung 303 der elektrischen Maschine, das Sonnenrad 41 des Planeten-Untersetzungsgetriebes und die Bremstrommel 52 der Trommelbremse sind fest miteinander verbunden und alle drei rotieren synchron.

Wenn sich das Rad im Antriebsmodus befindet, arbeitet die elektrische Maschine und gibt ein Antriebsdrehmoment aus; der Bremsschuh 51 der Trommelbremse ist nicht gespreizt und es wird kein Bremsdrehmoment ausgegeben. Der Rotor 302 treibt die Rotorhalterung 303 an, sodass diese rotiert, das Sonnenrad 41 wird angetrieben und rotiert und das Antriebsdrehmoment wird an das Planeten-Untersetzungsgetriebe übertragen. Somit wird das von der elektrischen Maschine ausgegebene Antriebsdrehmoment durch die Verstärkungswirkung des Planeten-Untersetzungsgetriebes verstärkt und an die Radnabe ausgegeben.

Wenn sich das Rad im Bremsmodus befindet, gibt die elektrische Maschine kein Antriebsdrehmoment aus; die Trommelbremse gibt ein Bremsdrehmoment aus, der Bremsschuh 51 wird gespreizt und übt eine Klemmwirkung auf die Bremstrommel 52 aus, auf die Bremstrommel 52 wirkt ein Bremsdrehmoment ein, sodass die Drehzahl der Bremstrommel 52 sinkt, womit auch die Drehzahl des Sonnenrads 41 sinkt. Somit wird das von der Trommelbremse ausgegebene Bremsdrehmoment durch die Verstärkungswirkung des Planeten-Untersetzungsgetriebes verstärkt und an die Radnabe ausgegeben.

Es ist zu beachten, dass man durch einfache Formveränderungen an dem oben stehenden Ausführungsbeispiel weitere Ausführungsbeispiele erhalten kann:
Beispielsweise kann, wenn das vom Antriebsgerät 30 und von der Bremse 50 ausgegebene Antriebs-/ Bremsdrehmoment ausreichend ist, um das Rad anzutreiben/zu bremsen, auf das Untersetzungsgetriebe 40 verzichtet werden und die Ausgangsenden des Antriebsgeräts 30 und der Bremse 50 werden direkt mit der Radnabe verbunden.

Beispielsweise kann das Untersetzungsgetriebe nur mit dem Ausgangsende des Antriebsgeräts 30 oder nur mit dem Ausgangsende der Bremse 50 verbunden sein, sodass nur das Antriebsdrehmoment oder nur das Bremsdrehmoment verstärkt ausgegeben werden.

Beispielsweise können zwei Untersetzungsgetriebe 40 angeordnet werden, die jeweils mit dem Ausgangsende des Antriebsgeräts 30 und der Bremse 50 verbunden sind, sodass das Antriebsdrehmoment und das Bremsdrehmoment separat verstärkt und ausgegeben werden.

## Patentansprüche

1. Radnabenantriebseinheit (100) umfassend:
eine Radnabe (110);
ein Radnabenlager (10), das in einer Radfelge sowie auf der Zentralachse der Radnabe (110) angeordnet ist und einen Lagerinnenring (11) und einen Lageraußenring (12) umfasst;
ein Gehäuse (20), welches das Radnabenlager (10) umschließt und einen Gehäuseraum bildet, wobei der Gehäuseraum eine erste, gegenüber der äußeren Umgebung abgedichtete Aufnahmekammer und eine zweite, gegenüber der äußeren Umgebung abgedichtete Aufnahmekammer umfasst;
ein Antriebsgerät (30), das in der ersten Aufnahmekammer angeordnet ist; sowie
ein Untersetzungsgetriebe (40), das in der zweiten Aufnahmekammer angeordnet ist;
wobei der Lagerinnenring (11) ein rotierender Ring ist und über ein erstes Verbindungsteil (60) mit dem Ausgangsende des Untersetzungsgetriebes (40) und mit der Radnabe (110) verbunden ist,
der Lageraußenring (12) ein nicht-rotierender Ring ist und mit dem Gehäuse (20) verbunden ist, und
das Eingangsende des Untersetzungsgetriebes (40) mit dem Ausgangsende des Antriebsgeräts (30) verbunden ist,
wobei das erste Verbindungsteil (60) eine Verbindungswelle (61) und ein mit dieser verbundenes ringförmiges Teil (62) umfasst, wobei
die Verbindungswelle (61) mit dem Lagerinnenring (11) durch Aufsetzen verbunden ist; und
das ringförmige Teil (62) koaxial zur Verbindungswelle (61) angeordnet ist und mit dem Ausgangsende des Untersetzungsgetriebes (40) und der Radnabe (110) verbunden ist,
wobei der Außendurchmesser des ringförmigen Teils (62) größer ist als der Außendurchmesser der Verbindungswelle (61),
wobei das ringförmige Teil (62) dem Gehäuse (20) in Axialrichtung gegenüber angeordnet ist und als Seitenwand der zweiten Aufnahmekammer dient und
die Außenumfangsfläche der Verbindungswelle (61), das Ausgangsende des Antriebsgeräts (30) und die Innenumfangsfläche des Gehäuses (20) die zweite Aufnahmekammer umschließen
und wobei das ringförmige Teil (62) mit dem Ausgangsende des Untersetzungsgetriebes (40) verbunden ist,
indem an dem ringförmigen Teil (62) mehrere erste Vorsprünge (620) angeordnet sind, die in Richtung auf das Ausgangsende des Untersetzungsgetriebes (40) vorstehen und die entlang der Umfangsrichtung mit Zwischenräumen verteilt sind und
indem am Ausgangsende des Untersetzungsgetriebes (40) mehrere zweite Vorsprünge (400) angeordnet sind, die in Richtung auf die Verbindungswelle (61) vorstehen und entlang der Umfangsrichtung mit Zwischenräumen verteilt sind,
wobei jeder erste Vorsprung (620) zwischen zwei benachbarte zweite Vorsprüngen (400) geklemmt und/oder jeder zweite Vorsprung (400) zwischen zwei benachbarte erste Vorsprünge (620) geklemmt wird.

2. Radnabenantriebseinheit (100) nach Anspruch 1, **dadurch gekennzeichnet, dass** die ersten Vorsprünge (620) an der in Axialrichtung auf das Ausgangsende des Untersetzungsgetriebes (40) gerichteten Endfläche des ringförmigen Teils (62) angeordnet sind; und die zweiten Vorsprünge (400) an der Außenumfangsfläche des Ausgangsendes des Untersetzungsgetriebes (40) angeordnet sind und in Radialrichtung vorstehen.

3. Radnabenantriebseinheit (100) nach Anspruch 1, **dadurch gekennzeichnet, dass** zwischen der Außenumfangsfläche des ringförmigen Teils (62) und der Innenumfangsfläche des Gehäuses (20) ein Dichtungsteil angeordnet ist.

4. Radnabenantriebseinheit (100) nach Anspruch 1, **dadurch gekennzeichnet, dass** zwischen der Außenumfangsfläche der Verbindungswelle (61) und der Innenumfangsfläche des Ausgangsendes des Antriebsgeräts (30) ein Dichtungsteil angeordnet ist.

5. Radnabenantriebseinheit nach Anspruch 1, **dadurch gekennzeichnet, dass** der Lageraußenring (12) über ein zweites Verbindungsteil (13) mit dem Gehäuse (20) verbunden ist.

6. Radnabenantriebseinheit (100) nach Anspruch 5, **dadurch gekennzeichnet, dass** an der Innenumfangsfläche des zweiten Verbindungsteils (13) ein Begrenzungsteil (130) angeordnet ist; und beim Aufsetzen des zweiten Verbindungsteils (13) auf den Lageraußenring (12) das Begrenzungsteil (130) in Axialrichtung und in Richtung auf das Untersetzungsgetriebe (40) an den Lageraußenring (12) stößt.

7. Radnabenantriebseinheit (100) nach Anspruch 1, **dadurch gekennzeichnet, dass** der Gehäuseraum weiterhin Folgendes umfasst: eine dritte Aufnahmekammer;
wobei die Radnabenantriebseinheit (100) weiterhin eine in der dritten Aufnahmekammer angeordnete Bremse (50) umfasst und das Ausgangsende der Bremse (50) mit dem Ausgangsende des Antriebsgeräts (30) und/ oder dem Eingangsende des Untersetzungsgetriebes (40) verbunden ist.

8. Radnabenantriebseinheit (100) nach Anspruch 7, **dadurch gekennzeichnet, dass** das Gehäuse (20) in Axialrichtung in mindestens zwei Teile unterteilt ist, wobei der in Axialrichtung am weitesten von der Radnabe (110) entfernt angeordnete Teil des Gehäuses (20) die Seitenwand der dritten Aufnahmekammer bildet und die Bremse (50) an dem in Axialrichtung am weitesten von der Radnabe (110) entfernt angeordneten Teil montiert ist.

9. Radnabenantriebseinheit (100) nach Anspruch 1, **dadurch gekennzeichnet, dass** das Antriebsgerät (30) eine elektrische Antriebsmaschine ist und einen Stator, einen Rotor sowie eine mit dem Rotor verbundene und aus der ersten Aufnahmekammer heraus gestreckte Rotorhalterung (303) umfasst, wobei die Rotorhalterung als Ausgangsende des Antriebsgeräts (30) dient.

10. Radnabenantriebseinheit (100) nach Anspruch 1, **dadurch gekennzeichnet, dass** das Untersetzungsgetriebe (40) ein Planeten-Untersetzungsgetriebe ist; wobei das Ausgangsende des Untersetzungsgetriebes (40) der Planetenrahmen (44) ist und das Sonnenrad (41) des Untersetzungsgetriebes (40) als Eingangsende dient.

11. Radnabenantriebseinheit (100) nach Anspruch 1, **dadurch gekennzeichnet, dass** sie weiterhin ein in der ersten Aufnahmekammer angeordnetes Kühlsystem umfasst, das zum Kühlen des Antriebsgeräts (30) verwendet wird.

## Claims

1. A wheel hub drive unit (100) comprising:
a wheel hub (110);
a wheel hub bearing (10) which is arranged in a wheel rim and on the central axis of the wheel hub (110) and comprises an inner bearing ring (11) and an outer bearing ring (12);
a housing (20) which encloses the wheel hub bearing (10) and forms a housing space, the housing space comprising a first receiving chamber sealed against the external environment and comprising a second receiving chamber sealed against the external environment;
a drive device (30) which is arranged within the first receiving chamber; and
a reduction transmission (40) which is arranged in the second receiving chamber;
wherein the inner bearing ring (11) is a rotating ring and is connected via a first connecting part (60) to the output end of the reduction transmission (40) and to the wheel hub (110),
the outer bearing ring (12) is a non-rotating ring and is connected to the housing (20), and
the input end of the reduction transmission (40) is connected to the output end of the drive device (30),
wherein the first connecting part (60) comprises a connecting shaft (61) and an annular part (62) connected thereto, wherein
the connecting shaft (61) is connected to the inner bearing ring (11) by means of fitting; and
the annular part (62) is arranged coaxially to the connecting shaft (61) and is connected to the output end of the reduction transmission (40) and the wheel hub (110),
wherein the outer diameter of the annular part (62) is greater than the outer diameter of the connecting shaft (61),
wherein the annular part (62) is arranged opposite the housing (20) in the axial direction and acts as a side wall of the second receiving chamber, and
the outer circumferential surface of the connecting shaft (61), the output end of the drive device (30) and the inner circumferential surface of the housing (20) enclose the second receiving chamber
and wherein the annular part (62) is connected to the output end of the reduction transmission (40),
in that a plurality of first protrusions (620) are arranged on the annular part (62), which protrusions protrude towards the output end of the reduction transmission (40) and which are distributed along the circumferential direction with intermediate spaces, and
in that a plurality of second protrusions (400) are arranged on the output end of the reduction transmission (40), which protrusions protrude towards the connecting shaft (61) and are distributed along the circumferential direction with intermediate spaces,
wherein each first protrusion (620) is clamped between two adjacent second protrusions (400) and/or each second protrusion (400) is clamped between two adjacent first protrusions (620).

2. The wheel hub drive unit (100) according to claim 1, **characterized in that** the first protrusions (620) are arranged on the end face of the annular part (62) which is directed in the axial direction towards the output end of the reduction transmission (40); and the second protrusions (400) are arranged on the outer circumferential surface of the output end of the reduction transmission (40) and protrude in the radial direction.

3. The wheel hub drive unit (100) according to claim 1, **characterized in that** a sealing part is arranged between the outer circumferential surface of the annular part (62) and the inner circumferential surface of the housing (20).

4. The wheel hub drive unit (100) according to claim 1, **characterized in that** a sealing part is arranged between the outer circumferential surface of the connecting shaft (61) and the inner circumferential surface of the output end of the drive device (30).

5. The wheel hub drive unit according to claim 1, **characterized in that** the outer bearing ring (12) is connected to the housing (20) via a second connecting part (13).

6. The wheel hub drive unit (100) according to claim 5, **characterized in that** a limiting part (130) is arranged on the inner circumferential surface of the second connecting part (13); and, when the second connecting part (13) is fitted on the outer bearing ring (12), the limiting part (130) strikes the outer bearing ring (12) in the axial direction and in the direction of the reduction transmission (40).

7. The wheel hub drive unit (100) according to claim 1, **characterized in that** the housing space further comprises: a third receiving chamber;
wherein the wheel hub drive unit (100) further comprises a brake (50) arranged in the third receiving chamber and the output end of the brake (50) is connected to the output end of the drive device (30) and/or the input end of the reduction transmission (40).

8. The wheel hub drive unit (100) according to claim 7, **characterized in that** the housing (20) is divided in the axial direction into at least two parts, wherein the part of the housing (20) which is arranged furthest away from the wheel hub (110) in the axial direction forms the side wall of the third receiving chamber and the brake (50) is mounted on the part arranged furthest from the wheel hub (110) in the axial direction.

9. The wheel hub drive unit (100) according to claim 1, **characterized in that** the drive device (30) is an electric drive machine and comprises a stator, a rotor and a rotor holder (303) connected to the rotor and extended out of the first receiving chamber, wherein the rotor holder acts as the output end of the drive device (30).

10. The wheel hub drive unit (100) according to claim 1, **characterized in that** the reduction transmission (40) is a planetary reduction transmission; wherein the output end of the reduction transmission (40) is the planetary frame (44) and the sun gear (41) of the reduction transmission (40) acts as the input end.

11. The wheel hub drive unit (100) according to claim 1, **characterized in that** it further comprises a cooling system which is arranged in the first receiving chamber and which is used for cooling the drive device (30).

## Revendications

1. Unité d'entraînement de moyeu de roue (100) comprenant :
un moyeu de roue (110) ;
un roulement de moyeu de roue (10), lequel est agencé dans une jante de roue ainsi que sur l'axe central du moyeu de roue (110) et lequel comprend une bague intérieure de roulement (11) et une bague extérieure de roulement (12) ;
un boîtier (20), lequel renferme le roulement de moyeu de roue (10) et lequel forme un espace de boîtier, dans laquelle l'espace de boîtier comprend une première chambre de réception étanche à l'environnement extérieur et une deuxième chambre de réception étanche à l'environnement extérieur ;
un appareil d'entraînement (30), lequel est disposé dans la première chambre de réception ; ainsi que
un engrenage réducteur (40) disposé dans la deuxième chambre de réception ;
dans laquelle la bague intérieure de roulement (11) est une bague rotative et est raccordée, au moyen d'une première pièce de raccordement (60), à l'extrémité de sortie de l'engrenage réducteur (40) et au moyeu de roue (110),
la bague extérieure de roulement (12) est une bague non rotative et est raccordée au boîtier (20), et
l'extrémité d'entrée de l'engrenage réducteur (40) est raccordée à l'extrémité de sortie de l'appareil d'entraînement (30),
dans laquelle la première pièce de raccordement (60) comprend un arbre de raccordement (61) et une pièce annulaire (62) raccordée à celui-ci, dans laquelle
l'arbre de raccordement (61) est raccordé par pose à la bague intérieure de roulement (11) ; et
la pièce annulaire (62) est disposée coaxialement à l'arbre de raccordement (61) et est raccordée à l'extrémité de sortie de l'engrenage réducteur (40) et au moyeu de roue (110),
dans laquelle le diamètre extérieur de la pièce annulaire (62) est supérieur au diamètre extérieur de l'arbre de raccordement (61),
dans laquelle la pièce annulaire (62) est disposée à l'opposé du boîtier (20) dans la direction axiale et sert de paroi latérale de la deuxième chambre de réception et
la surface périphérique extérieure de l'arbre de raccordement (61), l'extrémité de sortie de l'appareil d'entraînement (30) et la surface périphérique intérieure du boîtier (20) délimitent la deuxième chambre de réception
et dans laquelle la pièce annulaire (62) est raccordée à l'extrémité de sortie de l'engrenage réducteur (40),
sur la pièce annulaire (62), une pluralité de premières saillies (620) étant disposées, lesquelles font saillie dans la direction de l'extrémité de sortie de l'engrenage réducteur (40) et lesquelles sont réparties le long de la direction périphérique avec des espaces intermédiaires et
à l'extrémité de sortie de l'engrenage réducteur (40), une pluralité de secondes saillies (400) étant disposées, lesquelles font saillie dans la direction de l'arbre de raccordement (61) et lesquelles sont réparties le long de la direction périphérique avec des espaces intermédiaires,
dans laquelle chaque première saillie (620) est bloquée entre deux secondes saillies (400) adjacentes et/ou chaque seconde saillie (400) est bloquée entre deux premières saillies (620) adjacentes.

2. Unité d'entraînement de moyeu de roue (100) selon la revendication 1, **caractérisée en ce que** les premières saillies (620) sont disposées sur la surface d'extrémité de la pièce annulaire (62), dirigée dans la direction axiale vers l'extrémité de sortie de l'engrenage réducteur (40); et les secondes saillies (400) sont disposées sur la surface périphérique extérieure de l'extrémité de sortie de l'engrenage réducteur (40) et font saillie dans la direction radiale.

3. Unité d'entraînement de moyeu de roue (100) selon la revendication 1, **caractérisée en ce qu'**une pièce d'étanchéité est disposée entre la surface périphérique extérieure de la pièce annulaire (62) et la surface périphérique intérieure du boîtier (20).

4. Unité d'entraînement de moyeu de roue (100) selon la revendication 1, **caractérisée en ce qu'**une pièce d'étanchéité est disposée entre la surface périphérique extérieure de l'arbre de raccordement (61) et la surface périphérique intérieure de l'extrémité de sortie de l'appareil d'entraînement (30).

5. Unité d'entraînement de moyeu de roue selon la revendication 1, **caractérisée en ce que** la bague extérieure de roulement (12) est raccordée au boîtier (20) au moyen d'une seconde pièce de raccordement (13).

6. Unité d'entraînement de moyeu de roue (100) selon la revendication 5, **caractérisée en ce qu'**une pièce de limitation (130) est disposée sur la surface périphérique intérieure de la seconde pièce de raccordement (13); et lors de la pose de la seconde pièce de raccordement (13) sur la bague extérieure de roulement (12), la pièce de limitation (130) vient heurter la bague extérieure de roulement (12) dans la direction axiale et dans la direction de l'engrenage réducteur (40).

7. Unité d'entraînement de moyeu de roue (100) selon la revendication 1, **caractérisée en ce que** l'espace de boîtier comprend en outre : une troisième chambre de réception ;
dans laquelle l'unité d'entraînement de moyeu de roue (100) comprend en outre un frein (50) disposé dans la troisième chambre de réception et l'extrémité de sortie du frein (50) est raccordée à l'extrémité de sortie de l'appareil d'entraînement (30) et/ou à l'extrémité d'entrée de l'engrenage réducteur (40).

8. Unité d'entraînement de moyeu de roue (100) selon la revendication 7, **caractérisée en ce que** le boîtier (20) est divisé dans la direction axiale en au moins deux parties, dans laquelle la partie du boîtier (20), laquelle est disposée la plus éloignée du moyeu de roue (110) dans la direction axiale, forme la paroi latérale de la troisième chambre de réception et le frein (50) est monté sur la partie disposée la plus éloignée du moyeu de roue (110) dans la direction axiale.

9. Unité d'entraînement de moyeu de roue (100) selon la revendication 1, **caractérisée en ce que** l'appareil d'entraînement (30) est une machine d'entraînement électrique et comprend un stator, un rotor ainsi qu'un support de rotor (303) raccordé au rotor et sortant de la première chambre de réception, dans laquelle le support de rotor sert d'extrémité de sortie de l'appareil d'entraînement (30).

10. Unité d'entraînement de moyeu de roue (100) selon la revendication 1, **caractérisée en ce que** l'engrenage réducteur (40) est un engrenage réducteur planétaire; dans laquelle l'extrémité de sortie de l'engrenage réducteur (40) est le châssis planétaire (44) et le pignon planétaire (41) de l'engrenage réducteur (40) sert d'extrémité d'entrée.

11. Unité d'entraînement de moyeu de roue (100) selon la revendication 1, **caractérisée en ce qu'**elle comprend en outre un système de refroidissement disposé dans la première chambre de réception, lequel est utilisé pour refroidir l'appareil d'entraînement (30).
